# EUROPÄISCHE PATENTANMELDUNG

(11) **EP 2 197 212 A2**
(43) Veröffentlichungstag der Anmeldung: **16.06.2010**
(21) Anmeldenummer: 10003087.3
(22) Anmeldetag: 20.12.2001
(51) Int. Cl.: H04N 7/24

(54) **Verfahren zur Verbesserung der Funktionalität der binären Representation von MPEG-7 und anderen XML basierten Inhaltsbeschreibungen**

(30) Priorität: 22.12.2000 DE 10064663; 28.02.2001 DE 10109547
(62) Teilanmeldung aus: 01985799.4
(71) Anmelder: SIEMENS AKTIENGESELLSCHAFT, 80333 München (DE)
(72) Erfinder: Heuer, Jörg, Dr., 82041 Oberaching (DE); Hutter, Andreas, Dr., 81673 München (DE); Niedermeier, Ulrich, 94405 Landau (DE)

(57) **Zusammenfassung**

Die Erfindung besteht im Wesentlichen darin, dass zwei unterschiedliche Schemaverzweigungscodes verwendet werden, wobei einer von den beiden wesentlich häufiger benutzt und somit eine Kompression bewirkt wird, das Schemaverzweigungscodes und Positionscodes zusammengefasst werden und die Bitlänge für die Schemaverzweigungscodes mitübertragen wird, wobei die Suchfunktion dadurch erleichtert wird, dass der erst Teil allein den Typ des referenzierten Elements spezifiziert und dass auf der Basis von einer zu übertragenden Schema-Versionsnummer und fest vorgegebenen Erweiterungsstrategien, die auch dem Decoder bekannt sind, eine Verbesserung der Erweiterbarkeit erreicht wird.

## Beschreibung

Die Erfindung betrifft die Codierung und Decodierung von XML-basierten strukturierten Dokumenten, wie sie beispielsweise bei MPEG-7 vorgesehen sind. Die XML (extensible markup language) ist ein Standard für die Definition von Dokumentenstrukturen und dient zur Darstellung strukturierter Daten in einem Textfile und bildet beispielsweise die Basis für die Sprache XHTML. Diese XML-basierten strukturierten Dokumente basieren auf einer Menge von strukturierten Elementen - im Folgenden auch "Schema" genannt - wie sie zum Beispiel mit Hilfe von Document Type Definition (DTD), XML-Schema oder Multimediadescription Schemes (DS) spezifiziert werde können.

Aus einem Entwurfpapier der ISO/IEC CD 15938-1 Information Technology - Multimedia Content Description Interface: Systems, ISO/IEC JTC 1 SC29/WG11/N3701, La Baule (France), Oktober 2000, insbesondere auf den Seiten 15 bis 22, ist das binäre Format von MPEG-7-Dateien und der Aufbau von Navigationspfaden mit Hilfe von Baumverzweigungscodetabellen bekannt.

Die Erfindung betrifft die Optimierung der Codierung strukturierter XML-Dokumente. Die der Erfindung zugrunde liegende Aufgabe besteht nun darin, Verfahren zur Verbesserung der Funktionalität der binären Repräsentation von XML-basierten Inhaltsbeschreibungen, insbesondere von MPEG-7-Dokumenten, anzugeben, bei dem die zu übertragende Datenmenge möglichst gering ist, Suchvorgänge innerhalb des Dokuments möglichst einfach sind und bei dem in der jeweiligen Schema-Vorlage nicht enthaltene Erweiterungen eines instanziierten Dokuments mit möglichst geringem Aufwand möglich sind.

Diese Aufgabe wird erfindungsgemäß durch die Merkmale des Patentanspruchs 1 gelöst. Der abhängige Anspruch betrifft vorteilhafte Weiterbildungen der erfindungsgemäßen Verfahren.

Aus dem oben erwähnten ISO/IEC-Entwurf geht unter anderem hervor, dass die Struktur eines XML-Dokuments als Datenbaum aufgefasst werden kann, wobei jedes Element der Beschreibung einen Knoten in diesem Baum entspricht. Die Struktur der Knoten wird durch die Definition im Schema, das dem Dokument zugrunde liegt, festgelegt. Insbesondere Typ und Anzahl der Kind-Elemente werden dadurch definiert. Der Prototyp eines solchen Knotens ist beispielsweise auf Seite 19 dieses Entwurfs dargestellt. Dieser Baumstrukturknoten besteht aus dem Namen des Elements oder komplexen Typs, einem Feld mit Codeworten TBC (Tree Branch Code), die zur Referenzierung der Kind-Elemente dienen, und den Baumzweigen, die die Referenzen auf die entsprechenden Kind-Elemente darstellen. Aus dem Entwurf kann ebenfalls entnommen werden, dass die TBCs in zwei Komponenten, nämlich einer Schemaverzweigung und einer Positionsinformation aufgeteilt sind, wobei die Schemainformation aus den Elementen abgeleitet wird, die im Schema als Kindelemente auftreten, während die Positionsinformation die Positionsinformation für diejenigen Elemente enthält, die mehrfach auftreten können. Die möglichen Arten von Kindelementen sind dabei, Elemente vom Typ Complex Type, die wiederum Kindelemente enthalten können, oder aber Elemente vom Typ Simple Type bzw. Attribute, die keine Kind-Elemente enthalten können. Die Länge des Feldes #position wird durch die maximale Anzahl ("maxOccurs") des betreffenden Elements festgelegt ,die im Schema spezifiziert ist. Für den Fall, dass hier in diesem Beispiel die maximale Anzahl größer als 7 oder nicht begrenzt ist, wird das Feld adaptiv verlängert, bis die zu codierende Position repräsentiert werden kann. Diese Aufteilung hat die Eigenschaft, dass der Schema-Verzweigungscode oder SBC #SchemaBranchCode immer gleich bleibt, unabhängig davon, wie viele Kinder in der aktuellen Instanziierung vorhanden sind bzw. sein können.

Um sich im Dokument zu bewegen, werden die TBCs, also die SchemaBranchCodes und gegebenenfalls die PositionCodes aneinandergereiht, was einen Pfad in dem Dokument ergibt. Ist das gewünschte Element erreicht, wird der letzte Code in der Tabelle eingefügt. Falls das gewünschte Element keine weiteren Kinder haben kann, also ein Attribut oder ein Simple Type ist, dann ist dieser Termination Code nicht notwendig und wird nicht gesendet. In diesem Fall wird anschließend das Attribut oder das Simple Type Element codiert übertragen.

Die Erfindung wird nachfolgend anhand der in den Zeichnungen dargestellten Beispielen näher erläutert. Dabei zeigt
Figur 1a bis 1d eine Adressierung von verschiedenen Elemententypen zur Erläuterung der Verbesserung der Kompression,
Figur 2 einen XML-Schematext,
Figur 2a und 2b zum Schematext von Figur 2 gehörige Knotentabellen,
Figur 3a und 3b Darstellungen zur Erläuterung einer erfindungsgemäßen Verbesserung der Suchmöglichkeiten,
Figur 4 und 4b Abschnitte aus dem Datenstrom zur Erläuterung der Verbesserung der Erweiterbarkeit
Figur 5a und 5b eine Darstellung von erweiterten Baumverzweigungsknoten zur Erläuterung der Verbesserung der Erweiterbarkeit,
Figur 6a und 6b Figur 2 und Figur 2b jedoch mit erweiterten Elementen und
Figur 7 und 8 eine Sequenz für eine Decoder zum Überspringen von unbekannten Elementen.

Die Erfindung besteht im Wesentlichen darin, dass zwei unterschiedliche Schemaverzweigungscodes verwendet werden, wobei einer von den beiden wesentlich häufiger benutzt und somit eine Kompression bewirkt wird, das Schemaverzweigungscodes und Positionscodes zusammengefasst werden und die Bitlänge für die Schemaverzweigungscodes mitübertragen wird, wobei die Suchfunktion dadurch erleichtert wird, dass der erste Teil allein den Typ des referenzierten Elements spezifiziert und dass auf der Basis von einer zu übertragenden Schema-Versionsnummer und fest vorgegebenen Erweiterungsstrategien, die auch dem Decoder bekannt sind, eine Verbesserung der Erweiterbarkeit erreicht wird.

### Verbesserung der Kompression

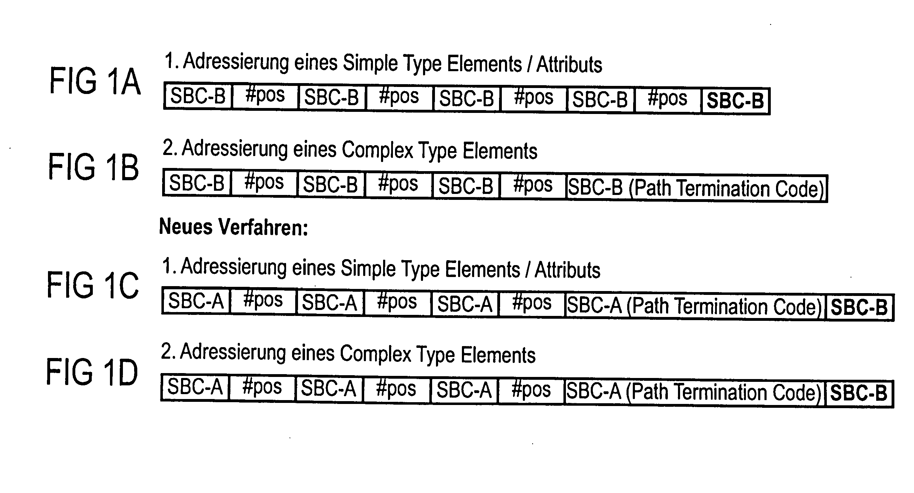

In Figur 1 ist eine bisherige Adressierung eines Simple Type Elements oder Attributs und in Figur 1b eine Adressierung eines Complex Type Elements dargestellt, wie es den bekannten Verfahren entspricht. In den Figuren 1c und 1d sind die entsprechenden Adressierungen gemäß dem erfindungsgemäßen Verfahren dargestellt. Hieraus wird deutlich, dass zwei unterschiedliche Schemaverzweigungscodes SBC-A und SBC-B zum Einsatz kommen und nicht nur der allgemeine Schemaverzweigungscode SBC-B. Wie eingangs erwähnt, besteht ein solcher Adresspfad aus verketteten TBC-Codes, das heißt falls erforderlich sind zwischen den Schemaverzweigungscodes SBC-A auch Positionscodes #pos vorhanden und nur am Ende erfolgt ein Schemaverzweigungscode SBC-A mit einem Pfadterminierungscode und keiner weiteren Positionsangabe gefolgt von einem allgemeinen Schemaverzweigungscode SBC-B, der auch Elemente vom Simple Type oder Attribute enthalten kann, die die Blätter der baumartigen Struktur bilden.

Aus dem beschriebenen Aufbau des Pfades aus verketteten TBC-Codes ist ersichtlich, das nur der letzte TBC des Pfades auf ein Attribut oder auf ein Simple Type Element verweisen kann. Alle vorhergehenden TBCs müssen auf Complex Type Elemente verweisen, da nur diese Kindelemente haben können. Im erfindungsgemäßen Verfahren werden nun mit dem Ziel, die Länge des Codes zur Positionierung im Dokument gegenüber dem eingangs erwähnten ISO/IEC-Entwurf zu verringern, für jeden Knoten zwei verschiedene Tabellen für die #Schema-Branch Codes SBC eingeführt. Die Tabelle A enthält nur die Elemente vom Complex Type, das heißt diejenigen Elemente, die Kind-Elemente haben können. Die andere Tabelle enthält alle Elemente, also auch die Attribute und Simple Type Elemente. Es muss dabei allerdings kein SBC für die Pfadbeendigung reserviert werden. Die #Schema-Branch Codes der beide Tabellen werden im Folgenden mit SBC-A bzw. SBC-B bezeichnet. Der Gesamtpfad wird nun wiederum aus der Verkettung von TBCs gebildet, wobei alle bis auf den letzten TBC mit SBC-A sowie gegebenenfalls den entsprechenden #Position-Codes gebildet werden. Das Ende des mit Hilfe der Tabelle A erstellten ersten Teils des Pfades wird mit einem Termination Code, zum Beispiel alle Bits 1, signalisiert. Es folgt dann noch genau ein TBC, dessen #Schema-Branch Code der Tabelle B entnommen wird. Es ist zu beachten, dass der Termination Code in dem erfindungsgemäßen Verfahren auch dann gesendet werden muss, wenn ein Attribut oder ein Simple Type Element adressiert wird. Da die Länge der #Schema Branch Codes von der Zahl der möglichen Elemente abhängt, sind die Codes in Tabelle A, also die Codes SBC-A, entsprechend kürzer. Auf die Kompression wirkt sich auch günstig aus, dass die Codes SBC-A deutlich häufiger benutzt werden als die Codes SBC-B.

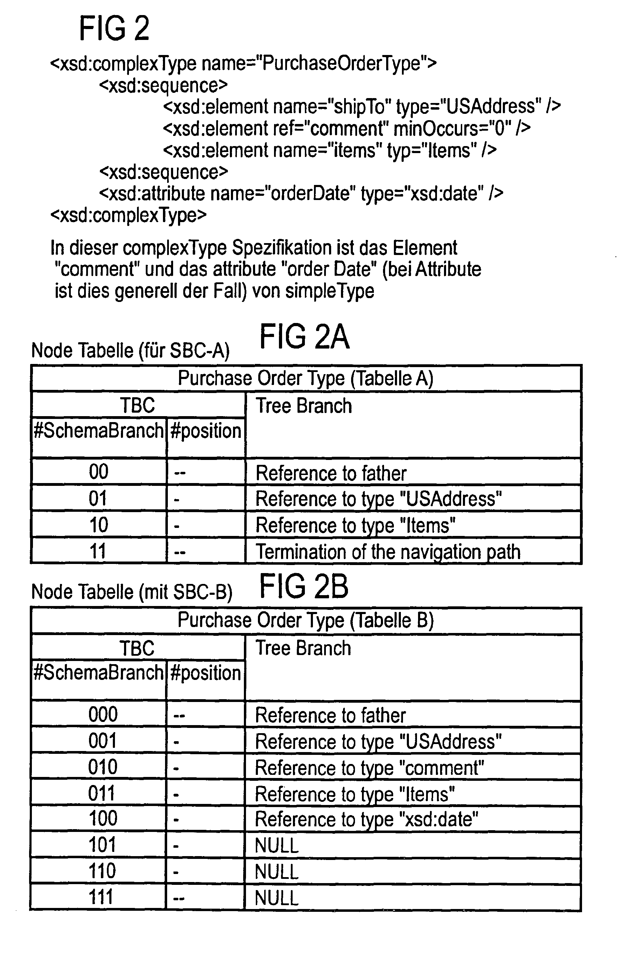

In Figur 2 ist ein Beispiel eines XML-Schematexts dargestellt und in den Figuren 2a und 2b die zugehörige Knotentabellen für SBC-A und SBC-B gezeigt. Hieraus wird deutlich, dass für die SBC-A die Schema Branch Codes verkürzt werden können, da hier die Simple Type Elemente und Attribute nicht referenziert werden müssen.

### Verbesserte Suchfunktion

Eine von der binären Repräsentation geforderte jedoch mit dem Verfahren gemäß dem ISO/IEC-Entwurfs nicht uneingeschränkt nutzbare Funktionalität ist die vereinfachte Suche nach bestimmten Elementen im Dokument. Diese Suche sollte optimalerweise mit einem einfachen Filtermechanismus durchgeführt werden können, indem eine im Voraus bestimmte Bitfolge, die das gesuchte Element im Dokument eindeutig adressiert, im Bitstrom per Mustervergleich gesucht wird. Bei einer schnellen Suche nach einem bestimmten Element im Dokumentenbaum wird dann der Bitstrom geparst, und nur jene Elemente genauer betrachtet, die über das richtige Pfadfragment angesprochen wurden. Für das Verfahren, wie es im ISO/IEC-Entwurf ausgeführt ist, ist eine derartige Filterung nicht uneingeschränkt durchführbar, da die Länge der #Position-Codes nicht im Voraus bestimmbar ist, wenn die maximale Anzahl mindestens eines Elements im Schema hier größer als 7 ist oder nicht begrenzt ist.

Im erfindungsgemäßen Verfahren wird nun mit dem Ziel, eine einfache Filterung des Bitstroms zu ermöglichen, eine teilweise Umsortierung der den Pfad beschreibenden Baumverzweigungsknoten (TBCs) vorgenommen. Dabei werden die #Position-Codes an das Ende des Pfades verschoben. Dies hat den Vorteil, dass der erste Teil des Pfades der die #Schema Branch-Fragmente enthält, allein den Typ des referenzierten Elements spezifiziert.

In einer alternativen Lösung werden in einem ersten Schritt die #Position Codes aufgespalten in einen Teil mit fester Länge und einen Teil mit variabler Länge. In einem zweiten Schritt werden die Teile mit variabler Länge aus den TBCs herausgenommen und an das Ende des Pfades verschoben.

Für den Fall von absoluten Adressen kann damit für die Suche nach einem bestimmten Element bereits vorab eine Festlegung des Bitmusters erfolgen. Bei der Verwendung von relativen Adressen ist das Muster abhängig von der aktuellen Position im Dokument. Für diesen Fall ergibt sich durch das neue Verfahren eine Vereinfachung dahingehend, dass die #Position-Codes für die Filterung nicht decodiert und ausgewertet werden müssen.

Für die vollständige Referenz muss der ganze Pfad, einschließlich der kompletten #Position-Codes gelesen und decodiert werden, damit bei jedem Knoten korrekt in das referenzierte Kindelement verzweigt werden kann.

Um die Implementierung dieses Verfahrens zu vereinfachen, kann zu Beginn des Pfads eine Angabe über die Gesamtlänge L, typischerweise in Bits, des Pfads ohne die hintangestellte #Position-Codes gesendet werden, so dass ein Zeiger Z für die #Position-Codes mitgeführt werden kann und somit die korrekten Positionen parallel zu den SBCs decodiert werden können. Zusätzlich wird hierdurch auch die Suche nach bestimmten Positionen (#positions) für die gesuchten Elemente ermöglicht und die Suche auch für den Fall der im Folgenden erläuterten Erweiterbarkeit unterstützt, bei der ein Teil des Pfads nicht jedem Decoder bekannt ist.

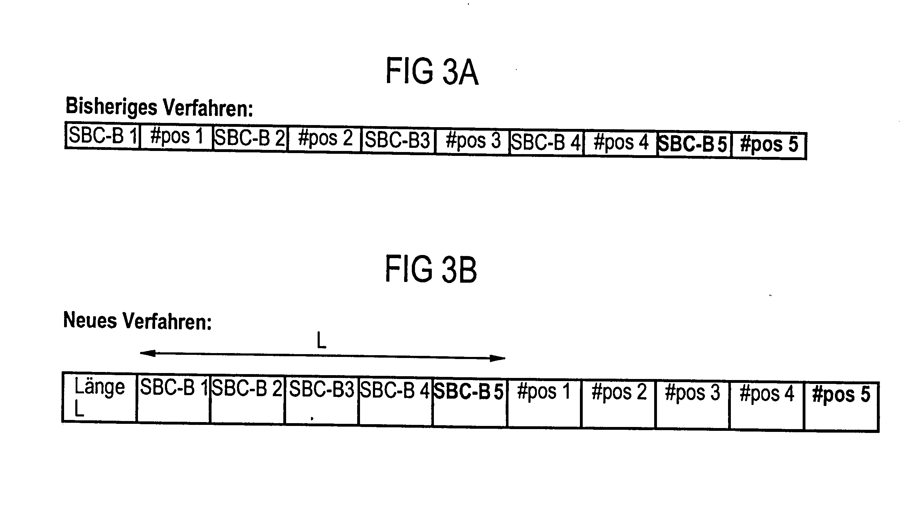

Figur 3a veranschaulicht diese Zusammenhänge am Beispiel der Adressierung eines Simple Type Element oder Attributs beim bisherigen Verfahren. In Figur 3b ist Entsprechendes für das erfindungsgemäße Verfahren dargestellt. Aus Figur 3b wird deutlich, dass alle Schemaverzweigungscodes SBC-B1...SBC-B5 eines jeweiligen Pfades aufeinanderfolgend angeordnet sind und insgesamt die Länge L aufweisen, die gleich zu Beginn als erstes übermittelt wird. Die Position Codes #pos 1...#pos5 sind von den SBC getrennt und aufeinanderfolgend angeordnet. Das Bitmuster für die absolute Adressierung mit der Bitlänge L ist aus der Schemadefinition bestimmbar, so dass eine Filterung des Bitstroms durch Mustervergleich möglich ist.

### Verbesserung der Erweiterbarkeit

Das Codierschema, auf dem der Algorithmus des ISO/IEC-Entwurfs beruht, ist kontext-sensitiv, das heißt in jedem Element werden nur die weiteren, durch den Kontext festgelegten Möglichkeiten codiert. Der Decoder kann den Bitstrom nur lesen und richtig interpretieren, wenn er die Schema-Definition kennt. Dem Decoder muss bekannt sein, welcher TBC-Code auf welches Element verweist, und wie lange der Bitcode in jedem Element ist, damit für jedes Pfadfragment die richtige Zahl an Bits gelesen wird.

In der Praxis wird häufig der Fall auftreten, dass ein definiertes Schema nachträglich erweitert wird, um neuen Randbedingungen, zum Beispiel neue Metadatenkategorien, Rechnung zu tragen. Diese Erweiterungen können optionale Elemente oder Attribute sein. In der XML-Textform gehaltene Dokumente, die nach der alten Schema-Definition erstellt worden sind, haben auch bezüglich der neuen Definition weiterhin ihre Gültigkeit (Vorwärtskompatibilität). Es können dies aber auch durch Vererbung abgeleitete Datentypen sein, die im Falle einer Beschränkung (derived by restriction) die TBCs beibehalten oder bei Erweiterung (derived by extension), wie im Folgenden beschrieben, eine erweiterte TBC-Tabelle erhalten.

In der binären Repräsentation von Dokumenten, wie sie beispielsweise in dem ISO/IEC-Entwurf dargestellt sind, ist dies jedoch nicht der Fall, da hier neue Elemente/Attribute TBCs zugeteilt bekommen können, die vorher andere Elemente/Attribute adressierten. In dem erfindungsgemäßen Verfahren kann dieser Nachteil jedoch mit folgenden Vorschriften vermieden werden:

Neue optionale Elemente können in den Tree Structure Nodes TSN oder Baumstrukturknoten nur hinter bestehenden Elementen und nur vor dem gegebenenfalls vorhandenden Pfadbeendigungscode bzw. Path Termination Code eingefügt werden. Den neuen Elementen werden dabei bisher nicht benutzte Schemaverzweigungscodes SBCs zugewiesen, wobei bestehende Elemente hierbei nicht ihre Schemaverzweigungscodezuordnung verlieren.

Falls die Erweiterung zu einer Adressierung mit einer längeren Adresse führen würde, dann könnten alle binären Repräsentationen aufgrund der Veränderung der Codelänge nicht mehr decodiert werden. Um dieses Problem zu lösen wird erfindungsgemäß folgende Adressierung eingeführt:

Neue Elemente/Attribute werden bezüglich des Schemaverzweigungscodes nach bestehenden Elementen/Attributen und vor der gegebenenfalls vorhandenden Pfadbeendigung in den Baumstrukturkonten TSN eingetragen. Stehen hier keine Schemaverzweigungscodes mehr zur Verfügung, dann wird die Adressierung um ein oder mehrere Bit, zum Beispiel Most Significant Bit, erweitert. Die bestehenden Codes werde beispielsweise mit einer Null erweitert. Eine Ausnahme bilden die Path Termination Codes, die mit einer 1 erweitert werden und so letzter Code des Baumstrukturknotens bleiben. Neue Elemente/Attribute werden nun entsprechend den neu verfügbaren Schemaverzweigungscodes SBC zugewiesen. Die Bitlängenveränderung der Schemaverzweigungscodes muss dem Decoder signalisiert werden. Um eine inkrementelle Erweiterbarkeit zu ermöglichen, müssen vorhergehende Versionen des Schemas dem Decoder bekannt sein. Hierfür ist es nicht notwendig, die komplette Information der jeweiligen Versionen zu speichern. Vielmehr muss nur die Bitlänge oder die Anzahl der Schemaverzweigungscodes der neuen Versionen eines entsprechend modifizierten Baumstrukturknotens gespeichert und gegebenenfalls übertragen werden, wobei die zweite Möglichkeit vorteilhaft sein kann um fehlerhafte Codes erkennen zu können. Diese Information muss vor den codierten Schemaverzweigungscodes, die verändert wurden, übertragen werden. Auf diese Weise werden die Bitlängen der Schemaverzweigungscodes mit Versionsnummern des Schemas verknüpft. Bevor ein Dokument binär codiert wird muss dann nur die Version des verwendeten Schemas spezifiziert werden und nicht wie bisher das gesamte verwendete Schema übertragen werden. Beispielsweise kann die Bitstromdefinition des ISO/IEC-Entwurfs um ein Feld zur Versionsangabe erweitert werden. Falls keine Versionskontrolle durchgeführt wird, kann als sicher bekannte Referenz eine Schemadefinition in einem Standard, zum Beispiel MPEG-7, verwendet werden. Diese Schemadefinition kann zum Beispiel als Version 1 festgelegt werden. Ein Ausführungsbeispiel für eine solche Versionsinformation ist im Folgenden angegeben:

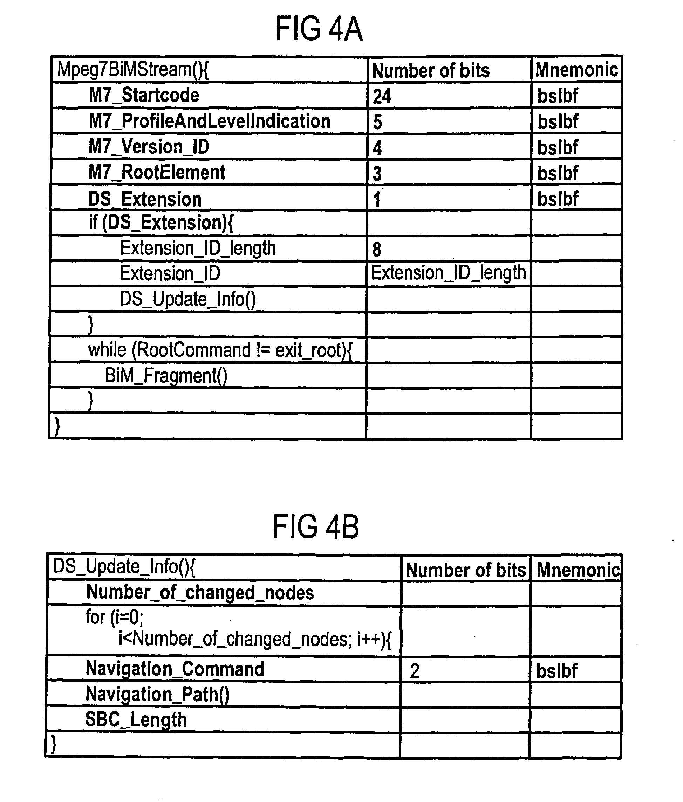

Hier wird zusätzlich im Streamheader, wie er im ISO/IEC-Entwurf spezifiziert ist, sowohl die Versionsinformation wie auch die Bitlängeninformation abgelegt. Hierzu wird die Information, wie in Figur 4a dargestellt, im Datenstrom abgelegt.

Den standardisierten Versionen kann eine eindeutige Versionsidentifizierung zugewiesen werden, die in Figur 4a mit M7_Version_ID bezeichnet ist. Des weiteren können proprietäre Erweitungen mit einer Erweiterungsidentifikation gekennzeichnet werden, die in Figur 4a mit Extension_ID bezeichnet ist. Diese kann spezifiziert werden, wenn auch die Bitlängen der erweiterten Baumstrukturknoten TSN im Bitstrom abgelegt werden. Dies wird, wie in Figur 4a gezeigt, durch ein Flag DS_Extension signalisiert. Die Bitlängeninformation der Baumverzweigungscodes TBC von den erweiterten Baumstrukturknoten TSN wird in der in Figur 4a angegebenen DS_Update_Info(), wie in Figur 4b gezeigt, codiert. Der

Ausdruck Number_of_changed_nodes signalisiert die Anzahl der geänderten Baumstrukturknoten. Die Anzahl kann mit variabler Länge codiert werden, entsprechend der im ISO/IEC-Entwurf vorgeschlagenen Positionsinformation.

Die Information des geänderten Baumstrukturknotens kann im Bitstrom durch ein Navigationskommando Navigation_Command und einen Navigationspfad Navigation_Path() adressiert werden. Die nachfolgend übertragenen Änderungsinformationen gelten dann für alle Elemente, die vom gleichen Typ sind wie der adressierte Knoten. Im Folgenden wird die geänderte Codewortlänge SBC_Length oder die geänderte Anzahl der Schemaverzweigungscodes in den Datenstrom eingefügt. Die Codewortlänge oder Anzahl ist wieder entsprechend dem Verfahren codiert, das auch zur Codierung der Number_of_changed_nodes eingesetzt wird.

In einem weiteren Ausführungsbeispiel können die geänderten Baumstrukturknoten durch direkte Adressierung der Complex Types im Schema identifiziert werden. Diese direkte Adressierung kann zum Beispiel durch Abzählen der im Schema definierten Complex Types erreicht werden.

Ein weiteres Problem besteht darin, dass ein nach dem neuen Schema codiertes Dokument von einem Decoder, dem nur die frühere Schemadefinition bekannt ist decodiert werden soll (Rückwärtskompatibilität). In einem XML-basierten textuellen XML-Dokument ist dies möglich, für Elemente, die bereits in dem alten Schema bekannt waren. Dies beruht auf zwei Eigenschaften:
Die im alten Schema definierten Elemente komplexen Typs sind erhalten geblieben, können sich aber in den enthaltenen Elementen und Attributen bzw. in Datentypen unterscheiden.
Durch Anfangs- und Endemarkierung der Elemente, sogenannte Tags, können neue Elemente übersprungen werden und bekannte decodiert werden.

Wird entsprechend dem vorhergehenden Adressierungsvorschlag die Bitlängenänderung der Baumstrukturknoten unterschiedlicher Versionen übertragen, wie dies im obigen Beispiel angegeben ist, so können bekannte Elemente eines erweiterten Baumstrukturknotens von einem "alten" Decoder, der noch auf der Basis eines früheren Schemas arbeitet, decodiert werden. Jedoch können Pfadspezifikationen, die in ein neues Element münden, vom "alten" Decoder nicht übersprungen werden und der Decoder kann nicht mehr weiterdecodieren. Um diese wichtige Funktionalität zu unterstützen, wird in dem erfindungsgemäßen Verfahren eine der folgenden Alternativen für rückwärtskompatible, codierte Dokumente eingesetzt:
a) Werden neue Elemente/Attribute in einem TSN adressiert, dann wird vorab zusätzlich die Anzahl der Bits für den kompletten Sub-Tree oder Nachfolgebaum für dieses Element/Attribut einschließlich der eingefügten N Bit Inhaltsdaten übertragen. Auf diese Weise kann der Decoder die nächsten N bits, die auf ihm nicht bekannte Weise codiert sind, überspringen und in dem bekannten TSN wieder aufsetzen.
b) Nach Übertragung des Pfades, der ein neues Element/Attribut enthält, wird eine eindeutige Synchronizationssequenz übermittelt, die der Decoder zum Wiederaufsetzen in dem bekannten TSN nutzen kann.
c) Werden Pfade übermittelt, die neue Elemente beinhalten, dann müssen deren TSNs, die einen Teil eines vollständigen Schemas darstellen, vorher übertragen werden.
d) Werden Pfade übermittelt, die neue Elemente beinhalten muß das vollständige Schema vorher übertragen werden.

Im Falle der alternativen c) und d) kann der Decoder auch den Inhalt der neu hinzugefügten Dokumente decodieren und gegebenenfalls speichern oder weiter verarbeiten.

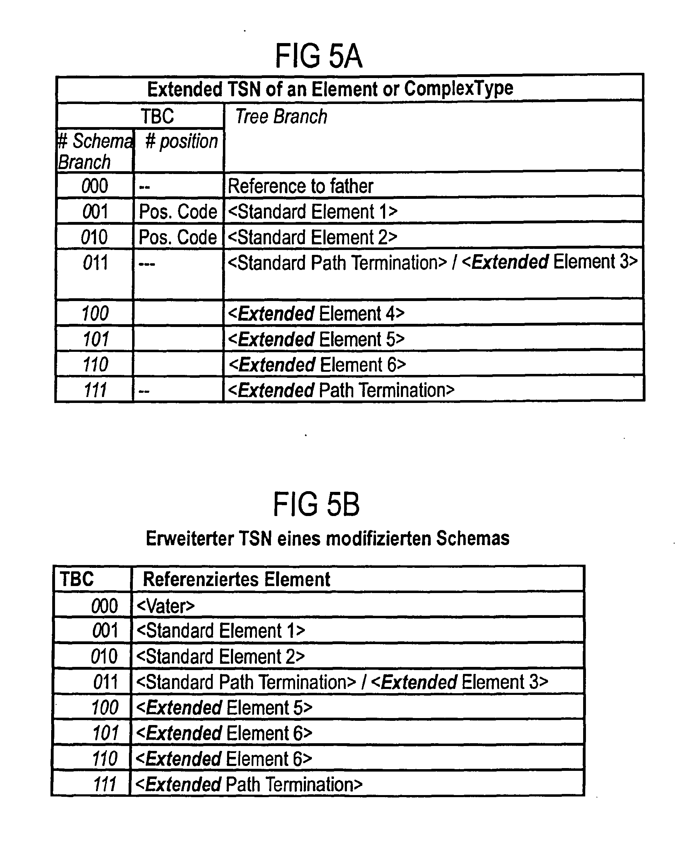

Das in den Figuren 5a und 5b dargestellte Beispiel zeigt die Veränderungen bei einer neuen Version einer Schemadefinition, wobei in Figur 5a ein erweiterter Baumstrukturknoten eines Complex Type Elements und in Figur 5b ein erweiterter Baumstrukturknoten eines modifizierten Schemas dargestellt sind. Die Elemente 3 bis 6 werden in der neuen Version angefügt. Die Länge des Schemabranchcodes verlängert sich hierdurch von zwei auf drei. Die bisherigen Adressen bleiben bis auf die Erweiterung um eine Null als MSB jedoch erhalten.

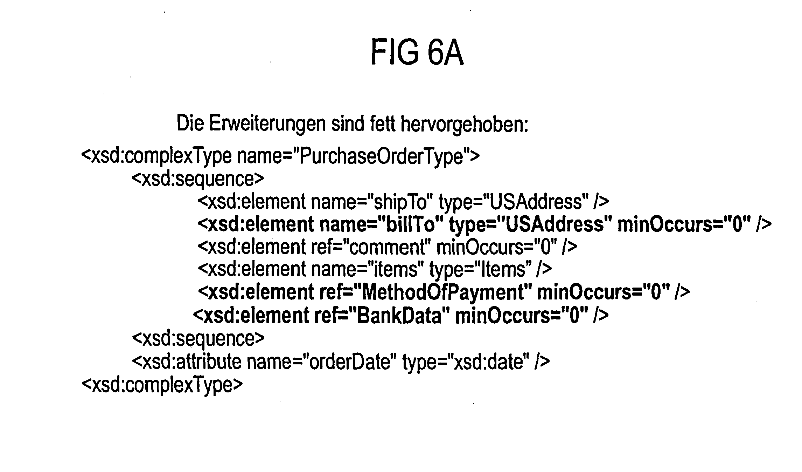

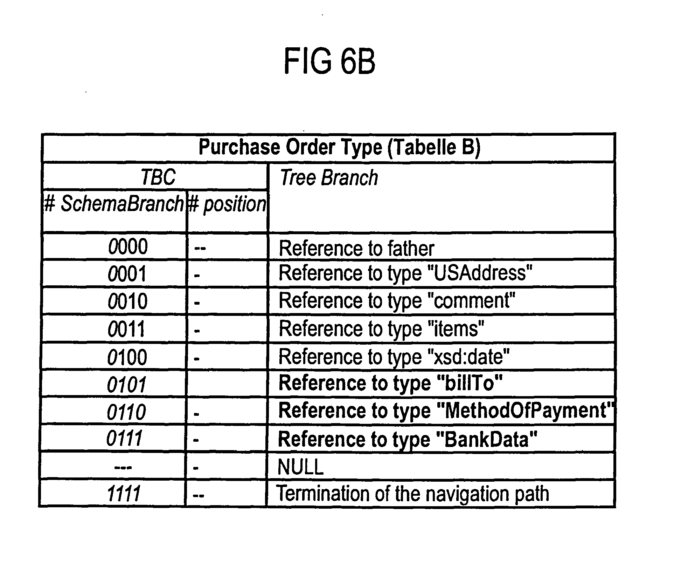

Im Folgenden ist ein Beispiel für eine Codierung von Schemaerweiterten Elementen in den Figuren 6a und 6b gezeigt. Als Ausgangspunkt dient das im Zusammenhang mit Figur 2 verwendete Beispiel. Aus Gründen der Einfachheit wird in dieser Darstellung auf die oben beschriebene Methode der Aufteilung von Knotentabellen verzichtet. Das ursprüngliche Schema "PurchaseOrderType" soll um einige Elemente erweitert werden. Die Erweiterungen gegenüber Figur 2 sind in Figur 6a fett hervorgehoben.

Es werden also die Elemente **"billTo", "MethodOfPayment"** sowie **"BankData"** neu eingefügt. Die neue Baumverzweigungscodetabelle muss daher entsprechend erweitert werden. Dies hat zur Folge, dass drei Bits nicht mehr zur Codierung aller Möglichkeiten ausreichen.

Wie diese Erweiterung auf einen Baumverzweigungscode mit vier Bit erfolgt, ist in Figur 6b näher ausgeführt.

Unter diesen Rahmenbedingungen werden nun zwei Fälle behandelt:

### Fall 1:

Dokumente, die nach der alten Schema-Definition codiert wurden, werden zu einem Decoder übertragen, dem das neue Schema bekannt ist. Die Versionsnummer des Schemas, das dem codierten Dokument zugrunde liegt, muss dem Dekoder als erstes übermittelt werden. Der Decoder weist hierzu eine Tabelle auf, in der für jede Versionsnummer die Bitbreite oder die Anzahl der Schemaverzweigungscodes SBC für alle Elemente abgelegt ist. Dadurch wird im Decoder festgestellt, dass Elemente vom Typ "PurchaseOrderType" nicht mit vier Bits, sondern nur mit drei Bits codiert sind. Mit dieser Information kann er das Dokument bereits korrekt decodieren.

### Fall 2:

Dokumente, die nach der neuen Schema-Definition codiert wurden, werden zu einem Decoder, der nur das alte Schema kennt, übertragen. Der Decoder erkennt anhand der Versionsnummer des Schemas, dass unbekannte Elemente übertragen werden können und dass bekannte Elemente mit einer anderen Bitbreite codiert sein können. Die neue Bitbreite der Elemente muss dem Decoder bekannt sein, weil er sonst die Synchronisation mit dem Encoder verlieren würde. Entweder wird die Information, die die einzelnen Elemente einer Bitbreite zuordnet, zum Beispiel eine Tabelle, vor dem eigentlichen Dokument übertragen, oder der Decoder kann auf diese Information unter einer spezifizierten Adresse (URI) zugreifen.

Entsprechend dem erfindungsgemäßen Verfahren hat der Encoder vier Möglichkeiten, das Dokument zu codieren:

### Möglichkeit 1:

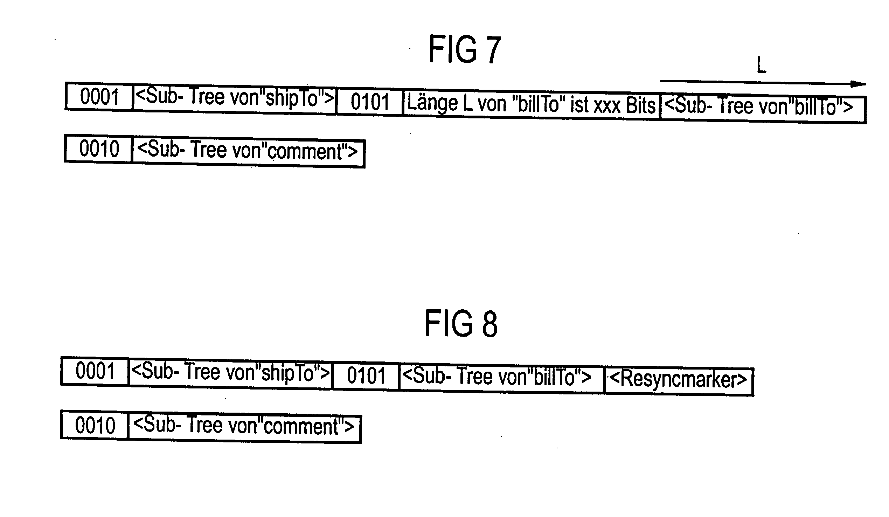

Für jedes neue Element wird die Länge des entsprechenden nachgeordneten Teilbaums, wie in Figur 7 gezeigt, übertragen.

Der Decoder erkennt anhand des Schemaverzweigungscodes 0101, dass ein Element adressiert ist, das nicht im Standardschema enthalten ist. Entsprechend interpretiert er die nächsten Bits als Länge L des unbekannten Elements. Diese Längenangabe könnte entsprechend der adaptiven, variablen Integer-Codierung, wie sie im ISO/IEC-Entwurf angegeben ist, erfolgen. Mit Hilfe dieser Längenangabe überspringt er den nachgeordneten Teilbaum "billTo" und setzt beim #SchemaBranch-Code 0010 wieder auf. Das folgende Element "Command" kann er dann wieder decodieren.

### Möglichkeit 2:

Nach einem neuen Element wird, wie in Figur 8 gezeigt, eine eindeutige Synchronisationssequenz übermittelt. Der Decoder parst den Bitstrom, bis er den normativ festgelegten Resyncmarker findet, und setzt danach wieder die Decodierung fort. Bei diesem Verfahren bietet sich die Möglichkeit, mehrere neue Elemente am Stück zu codieren und erst nach dem letzten den Resyncmarker zu übertragen.

### Möglichkeit 3:

Die Baumstrukturknoten, die neue Elemente enthalten, sowie deren Position im Dokumentenbaum werden vor dem eigentlichen Dokument übertragen. Bei dieser Methode wird also das Schema, das dem Decoder bekannt ist, aktualisiert. Die Übertragung des Dokuments erfolgt damit entsprechend dem Fall, dass das Schema bekannt ist. Außerdem kann er das neu übertragene Schema dazu verwenden, seine intern bekannten Elemente über die neuen zu erweitern, sofern eine eindeutige Versionsnummer zugewiesen wird, die das neue Schema identifiziert.

### Möglichkeit 4:

Ein vollständiges, neues Schema wird übertragen. In diesem Fall kann der Decoder das Dokument behandeln wie es nach einem bekannten Schema codiert wurde. Außerdem kann er das neu übertragene Schema dazu verwenden, seine intern bekannten Elemente um die neuen zu erweitern, sofern eine eindeutige Versionsnummer zugewiesen wird, die das neue Schema identifiziert.

Die einzelnen erfindungsgemäßen Verfahren können für sich alleine oder in Kombination durchgeführt werden.

## Patentansprüche

1. Verfahren zur Verbesserung der Funktionalität einer binären Repräsentation einer XML-basierten Inhaltsbeschreibung, wobei die Struktur eines instanziierten XML-Dokuments einer baumartigen Datenstruktur entspricht, wobei jeder Baumknoten ein Element der Inhaltsbeschreibung darstellt und eine Struktur aufweist, die in einem Schema festgelegt ist und wobei das Schema Baumknoten mit einem Baumverzweigungscode (TBC) aufweist, wobei der Baumverzweigungscode Schemaverzweigungscodes aufweist, bei dem ein bestehendes Schema **dadurch** erweitert wird, dass in einem Baumknoten nicht belegte Schemaverzweigungscodes für Erweiterungen mit neuen Elementen herangezogen werden, bis alle verbraucht sind und dann die Bitlänge (B) des Schemaverzweigungscodes nach Bedarf erhöht wird und bei dem eine Bitlängenänderung einem Decoder zur korrekten Decodierung der Inhaltsbeschreibung mitgeteilt wird.

2. Verfahren nach Anspruch 1, bei dem im Decoder mindestens eine Version des Schemas gespeichert ist und nur Informationen für einen Abruf der Schemaänderung relativ zu einer gespeicherten Version oder direkt eine Schemaänderung relativ zu einer gespeicherten Version gesendet werden.
